# EUROPÄISCHE PATENTSCHRIFT

(11) **EP 3 746 939 B1**
(45) Veröffentlichungstag und Bekanntmachung des Hinweises auf die Patenterteilung: **05.11.2025**
(21) Anmeldenummer: 19765425.4
(22) Anmeldetag: 02.09.2019
(51) Int. Cl.: G06V 20/58

(54) **VERFAHREN ZUR AUSWERTUNG VON SENSORDATEN MIT ERWEITERTER OBJEKTDETEKTION**
METHOD FOR EVALUATING SENSOR DATA WITH AN ADVANCED OBJECT DETECTION
PROCÉDÉ D'ÉVALUATION DE DONNÉES DE CAPTEUR AVEC UNE DÉTECTION AVANCÉE D'OBJET

(30) Priorität: 04.09.2018 DE 102018214959
(43) Veröffentlichungstag der Anmeldung: 09.12.2020
(73) Patentinhaber: Robert Bosch GmbH, 70442 Stuttgart (DE)
(72) Erfinder: HERTLEIN, Heinz, 74235 Erlenbach (DE); MAUCHER, Dominik, 70190 Stuttgart (DE)
(86) Internationale Anmeldenummer: PCT/EP2019/073316
(87) Internationale Veröffentlichungsnummer: WO 2020/048909

(56) Entgegenhaltungen:
- EP-A1- 2 879 109
- EP-A2- 1 686 537
- WO-A1-2018/060313
- DE-A1- 102014 224 762

## Beschreibung

Die Erfindung betrifft ein Verfahren zur Auswertung von Sensordaten, wobei Sensordaten durch Abtasten einer Umgebung durch mindestens einen Sensor ermittelt werden, basierend auf den Sensordaten eine Objektdetektion zum Ermitteln von Objekten aus den Sensordaten und eine Objektfilterung durchgeführt werden. Des Weiteren betrifft die Erfindung ein Steuergerät.

### Stand der Technik

Bei Fahrerassistenzsystemen und automatisierten Fahrfunktionen muss das durch Sensoren beobachtete Umfeld analysiert werden. Bei einer Verwendung der in dem Bereich typischerweise eingesetzten Sensoren wie RADAR-Sensoren, LIDAR-Sensoren und Kameras kann eine ausreichende richtig-positiv-Rate der zu erkennenden relevanten Objekte in der Umgebung je nach Anwendung oft nur erreicht werden, wenn eine signifikant hohe falsch-positiv-Rate in Kauf genommen wird.

Abhängig von nachgelagerten Funktionen kann eine hohe falsch-positiv-Rate die Verfügbarkeit einer Funktion jedoch erheblich einschränken. Im allgemeinen Fall kann die erhöhte falsch-positiv-Rate durch Geisterobjekte entstehen, die durch Spiegelung oder Mehrfachreflexionen entstehen. Die Art und Entstehung von Geisterobjekten unterscheidet sich je nach Sensormodalität.

EP 2 879 109 A1 beschreibt eine fahrzeuggestützte Umfeldwahrnehmung basierend auf Bildaufnahmen des Umfelds. Es wird eine Spiegelungserkennung durchgeführt, um Reflektionen in den Bildaufnahmen zu erkennen und fehlerhafte Warnungen zu vermeiden. Zum Durchführen der Spiegelungserkennung werden Helligkeitsunterschiede und Kontrastunterschiede in den Bildaufnahmen analysiert.

Die Offenlegungsschrift DE 10 2014 224 762 A1 offenbart ein Verfahren und eine Vorrichtung zur Gewinnung von Information über ein Objekt in einem nicht einsehbaren, vorausliegenden Umfeldbereich eines Kraftfahrzeugs mittels eines Kamerasystems des Kraftfahrzeugs.

Die Offenlegungsschrift WO 2018/060313 A1 offenbart ein Verfahren zum Generieren und Verwenden von Lokalisationsreferenzdaten.

### Offenbarung der Erfindung

Die der Erfindung zugrunde liegende Aufgabe kann darin gesehen werden, ein Verfahren zum Auswerten von Sensordaten vorzuschlagen, welches eine falsch-positiv-Rate verringern kann.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zur Auswertung von Sensordaten bereitgestellt, wobei Sensordaten durch Abtasten einer Umgebung durch mindestens einen Sensor ermittelt werden. Basierend auf den Sensordaten werden eine Objektdetektion zum Ermitteln von Objekten aus den Sensordaten und eine Objektfilterung durchgeführt, wobei von dem mindestens einen Objekt bekannten Oberflächeneigenschaften anhand eines Zugriffs auf eine Datenbank ermittelt werden.

Gemäß einem weiteren Aspekt der Erfindung wird ein Steuergerät zum Koppeln mit mindestens einem Sensor und zum Auslesen von Sensordaten des mindestens einen Sensors bereitgestellt, wobei das Steuergerät dazu eingerichtet ist, alle Schritte des Verfahrens auszuführen.

Durch das Verfahren können Objekte erkannt und die Oberflächeneigenschaften der erkannten Objekte ermittelt oder geschätzt werden. Die Objekte können auch als nicht-klassifizierte Ziele ausgestaltet sein und müssen nicht zwingend bereits als definierte Objekte spezifiziert sein. Anhand der zusätzlichen Oberflächeneigenschaften der Objekte oder Ziele kann die Genauigkeit der Sensordatenauswertung erhöht und die Zuverlässigkeit einer Umfeldsensorik verbessert werden.

Das Verfahren nutzt hierbei insbesondere einen Klassifikator, welcher trainiert und trainierbar ausgestaltet sein kann. Des Weiteren können in einer Datenbank hinterlegte Daten, wie beispielsweise Kartendaten, dazu eingesetzt werden, Eigenschaften einer Oberfläche von Objekten zu ermitteln bzw. Oberflächeneigenschaften bestimmten Objekten zuzuordnen.

Die Anwendbarkeit des Prinzips ist somit nicht auf eine bestimmte Sensormodalität beschränkt. Zusätzlich kann durch die Verwendung eines multimodalen Klassifikators (basierend auf der Fusion mehrerer Modalitäten) die Zuverlässigkeit der Umfeldsensoren und der mit den Sensoren verbundenen Funktionen erhöht werden.

Durch die Verwendung von Kartendaten kann das Verfahren auch in Fällen eingesetzt werden, in welchen die notwendige Erkennung der Objekteigenschaften vom Fahrzeug aus nicht oder nicht mit ausreichender Zuverlässigkeit oder nicht rechtzeitig genug möglich ist.

Das Verfahren ermöglicht es, durch das Vorwissen der Oberflächen bzw. der Oberflächeneigenschaften in der Umgebung das Vorkommen von Geisterobjekten zu reduzieren oder diese mit weiteren Attributen zu verknüpfen, um beispielsweise in einer nachgelagerten Sensorfusion die Objekterkennung zu verbessern.

Nach einer Ausführungsform, die nicht Teil der Erfindung ist, werden Oberflächeneigenschaften von mindestens einem erkannten Objekt parallel zu einer Objektdetektion ermittelt. Hierdurch können gezielt Klassifikatoren eingesetzt werden, um Oberflächeneigenschaften, die beispielsweise Spiegelungen bei einer jeweiligen Sensormodalität begünstigen, ermittelt werden. Insbesondere können basierend auf den ermittelten Oberflächeneigenschaften der Objekte geprüft werden, ob identifizierte Objekte Spiegelungen sind und damit als Geisterobjekte einzustufen sind. Somit kann eine direkt und/oder indirekte Überprüfung der erkannten Objekte durchgeführt werden, welche die Zuverlässigkeit der Auswertung erhöht.

Gemäß einer weiteren Ausführungsform, die nicht Teil der Erfindung ist, werden Ergebnisse der Ermittlung der Oberflächeneigenschaften bei der Oberflächenfilterung eingesetzt. Die ermittelten oder geschätzten Oberflächeneigenschaften von Objekten können in der Sensordatenverarbeitung direkt verwendet werden, sodass Geisterobjekte reduziert und somit die Genauigkeit der Objektzustände verbessert wird.

Nach einem weiteren Ausführungsbeispiel, das nicht Teil der Erfindung ist, wird während einer Objektfilterung ein Abgleich mit einer Datenbank zum Ermitteln von Oberflächeneigenschaften von mindestens einem detektierten Objekt durchgeführt. Erfindungsgemäß ist die Datenbank als eine Karte mit hinterlegten Oberflächeneigenschaften ausgestaltet. Hierdurch kann eine weitere Ausprägung des Verfahrens bereitgestellt werden, bei welcher beispielsweise bereits existierende hochgenaue Karten um die Materialeigenschaften und/oder Oberflächen-eigenschaften von statischen Objekten erweitert werden.

Bei den Objekteigenschaften und/oder Materialeigenschaften kann es sich beispielsweise um Betonwände, Spiegel, Glasfassaden, Leitplanken, Lärmschutzwände und dergleichen handeln, welche aufgrund ihrer Oberflächenbeschaffenheit einen Einfluss auf die Umfelderfassung und die Sensorauswertung ausüben. Mit dem Vorwissen über die Oberfläche relevanter Objekte kann die Sensordatenverarbeitung verbessert oder bei einer nachgeschalteten Sensordatenfusion die Genauigkeit erhöht werden. Insbesondere kann durch das Verfahren die falsch-positiv-Rate reduziert werden, ohne dass die richtig-positiv-Rate beeinträchtigt wird.

Erfindungsgemäß wird basierend auf den ermittelten Objekteigenschaften von mindestens einem Objekt mindestens ein Geisterobjekt aus der Menge erkannter Objekte entfernt oder die Position des Geisterobjektes zu einem tatsächlich vorhandenen Objekt korrigiert. Durch das Wissen über die Oberflächeneigenschaften der Objekte im Umfeld des Sensors kann deren Einfluss auf den Sensor bestimmt werden. Beispielsweise kann die Ablenkung, Brechung, Beugung oder Spiegelung von Strahlen eines LIDAR-Sensors oder eines RADAR-Sensors anhand der Oberflächeneigenschaften ermittelt und zum Plausibilisieren der erkannten Objekte bei der Sensordatenanalyse herangezogen werden.

Beispielsweise kann bei einer Umfelderfassung durch einen LIDAR-Sensor ein Fahrzeug hinter einer Leitplanke detektiert werden, während das Fahrzeug aufgrund einer Verdeckung durch ein vorausfahrendes Fahrzeug ausschließlich als gespiegeltes Geisterfahrzeug detektiert wird. Durch das Verfahren kann die spiegelnde Oberfläche der Leitplanke entweder erkannt oder aus einer Karte entnommen werden. Mit dieser Information kann entweder das Geisterobjekt entfernt oder die Position des Geisterobjekts durch Triangulation korrigiert werden.

Gemäß einer weiteren Ausführungsform, die nicht Teil der Erfindung ist, werden die Oberflächeneigenschaften von mindestens einem erkannten Objekt durch maschinelles Lernen erkannt oder klassifiziert. Hierdurch können beispielsweise neuronale Netze dazu eingesetzt werden, einen Klassifikator bereitzustellen, welcher beispielsweise anhand einer Form der erkannten Objekte eine voraussichtliche Oberflächenbeschaffenheit diesen erkannten Objekten zuordnet.

Nach einer weiteren Ausführungsform werden die Oberflächeneigenschaften von mindestens einem erkannten Objekt im Rahmen einer Sensordatenfusion durch eine Objektfilterung basierend auf einem Zugriff einer Datenbank ermittelt oder bereits erkannte Oberflächeneigenschaften von mindestens einem erkannten Objekt werden im Rahmen einer Sensordatenfusion durch eine Objektfilterung verwendet. Es können die Ergebnisse der Oberflächenschätzung an die nachliegende Sensordatenfusion weitergereicht werden, um dort ebenso die Genauigkeit zu verbessern oder die falsch-positiv-Rate zu reduzieren.

Des Weiteren kann der Objektfilter auf Fusionsebene eingesetzt werden. Im Vergleich zur Filterung im Rahmen der Sensordatenverarbeitung kann dabei eine höhere falsch-positiv-Rate von den Sensoren zugelassen werden, da die Filterung später erfolgt. Ein Vorteil im Vergleich zur Objektfilterung auf der Ebene der Sensordatenverarbeitung ist die Möglichkeit, dass die Oberflächenschätzung einer Sensor-Modalität in die Objekterkennung einer anderen Modalität einfließen kann, sodass zum Beispiel die Oberflächenschätzung der Videokamera die Objekterkennung vom LIDAR-Sensor verbessern kann. Hierdurch können weitere Sensoren dazu eingesetzt werden die Oberflächeneigenschaften zu bestätigen oder unterstützend bei der Ermittlung der Oberflächeneigenschaften wirken.

Im Folgenden werden anhand von stark vereinfachten schematischen Darstellungen bevorzugte Ausführungsbeispiele der Erfindung näher erläutert.

Hierbei zeigen
- Fig. 1: ein Umfeld eines mit Sensoren ausgestatteten Fahrzeugs zum Veranschaulichen eines Verfahrens gemäß einer Ausführungsform,
- Fig. 2: ein schematisches Ablaufdiagramm zum Veranschaulichen des Verfahrens gemäß einer weiteren Ausführungsform,
- Fig. 3: ein schematisches Ablaufdiagramm zum Veranschaulichen des Verfahrens gemäß einer weiteren Ausführungsform mit einem auf eine Datenbank zugreifenden Objektfilter,
- Fig. 4: ein schematisches Ablaufdiagramm zum Veranschaulichen des Verfahrens gemäß einer weiteren Ausführungsform mit einer Sensordatenfusion und
- Fig. 5: ein schematisches Ablaufdiagramm zum Veranschaulichen des Verfahrens gemäß einer weiteren Ausführungsform mit einem im Rahmen einer Sensordatenfusion auf eine Datenbank zugreifenden Objektfilter.

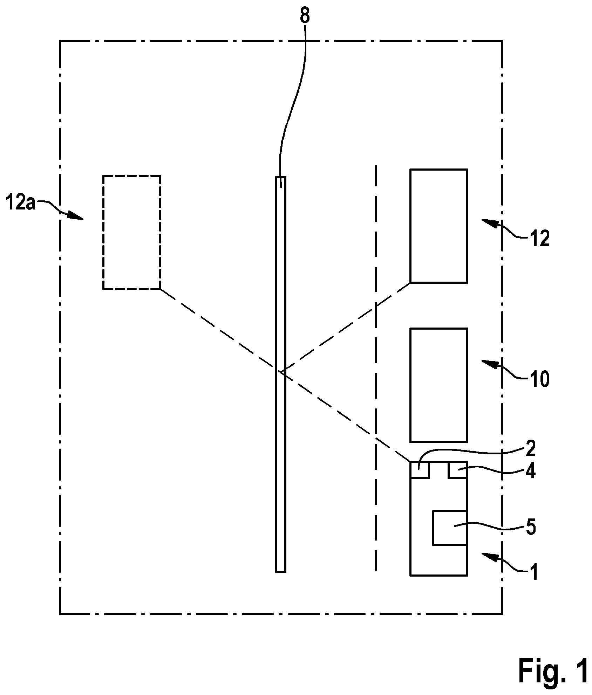

In der Figur 1 ist ein Umfeld eines Fahrzeugs 1 mit Sensoren 2, 4 zum Veranschaulichen eines Verfahrens 6 gemäß einer Ausführungsform dargestellt. Insbesondere zeigt die Figur eine beispielhafte Verkehrssituation mit zwei Fahrstreifen in einer Richtung.

Die Sensoren 2, 4 können beispielsweise ein LIDAR-Sensor 2 und eine Kamera 4 sein.

Die Sensoren 2, 4 sind mit einem Steuergerät 5 verbunden. Das Steuergerät 5 dient zum Auslesen von Sensordaten und zum Ausführen des Verfahrens 6.

In dem Umfeld sind die zwei Fahrstreifen in eine Richtung von Fahrstreifen in die andere Richtung durch eine Fahrbahntrennung 8 voneinander beabstandet. Die Fahrbahntrennung 8 weist spiegelnden Oberflächeneigenschaften auf.

Das Fahrzeug 1 erkennt ein vorausfahrendes Fahrzeug 10, während das weitere Fahrzeug 12 aufgrund der Verdeckung durch das vorausfahrende Fahrzeug 10 ausschließlich als ein gespiegeltes Geisterfahrzeug 12a detektiert wird. Durch das Verfahren 6 kann entweder die spiegelnde Oberfläche der Fahrbahntrennung 8 erkannt oder aus einer Karte ermittelt werden. Mit dieser Information kann somit entweder das Geisterobjekt 12a entfernt oder durch Triangulation auf die richtige Position des weiteren Fahrzeugs 12 gesetzt werden.

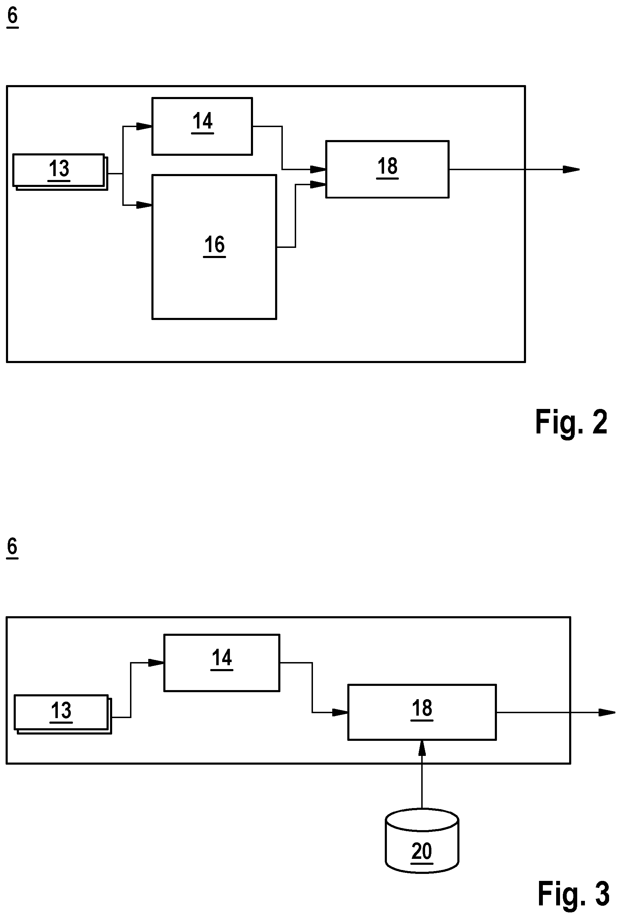

Die Figur 2 zeigt ein schematisches Ablaufdiagramm zum Veranschaulichen des Verfahrens 6 gemäß einer weiteren Ausführungsform. Insbesondere ist eine Sensor-Architektur dargestellt. Dabei erfolgt eine Objektdetektion 14 anhand der aufgenommenen Sensordaten 13 des Detektors des Sensors 2, 4. Parallel zur Objektdetektion 14 erfolgt die Material-/Oberflächenklassifikation 16. Anhand der Oberflächenschätzung 16 und der Objektdaten kann ein nachgeschalteter Objektfilter 18 die falsch-positiv-Rate reduzieren und/oder die richtig-positiv-Rate steigern. Die Oberflächenklassifikation 16 kann zum Beispiel durch ein zuvor gelerntes neuronales Netz realisiert werden.

In der Figur 3 ist ein schematisches Ablaufdiagramm zum Veranschaulichen des Verfahrens 6 gemäß einer weiteren Ausführungsform mit einem auf eine Datenbank 20 zugreifenden Objektfilter 18 gezeigt. Insbesondere wird hierbei die Information über die Oberflächeneigenschaft aus einer Karte 20 gelesen, wobei der Objektfilter 18 die gleiche Funktion wie die in Figur 2 gezeigte Oberflächenklassifikation 16 übernimmt. Es werden somit den erkannten Objekten 8, 10, 12, 12a die Oberflächeneigenschaften durch den Objektfilter 18 zugeordnet. Die Ergebnisse des Objektfilters 18 können anschließend weiter verarbeitet werden.

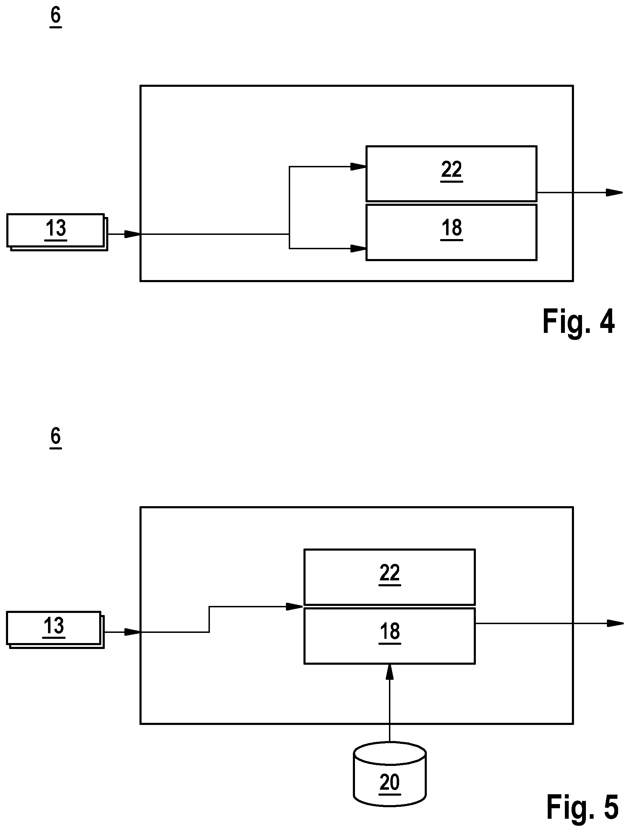

In der Figur 4 ist ein schematisches Ablaufdiagramm zum Veranschaulichen des Verfahrens 6 gemäß einer weiteren Ausführungsform mit einer Sensordatenfusion 22 dargestellt. Hierbei wird der Objektfilter 18 auf Fusionsebene angewendet. Im Vergleich zur Filterung im Rahmen der Sensordatenverarbeitung kann hier eine höhere falsch-positiv-Rate von den Sensoren 2, 4 zugelassen werden, da die Objektfilterung 18 später erfolgt. Ein Vorteil im Vergleich zur Objektfilterung auf der Ebene der Sensordatenverarbeitung ist die Möglichkeit, dass die Oberflächenschätzung einer Sensor-Modalität in die Objekterkennung einer anderen Modalität einfließt, so dass zum Beispiel die Oberflächenschätzung 16 der Videokamera 4 die Objekterkennung 14 vom LIDAR-Sensor 2 verbessern kann. Die aus der Objektfilterung 18 und der Sensordatenfusion 22 verarbeiteten Sensordaten 13 mit potentiellen Objekten und Oberflächeneigenschaften können anschließend weiterverarbeitet werden. Dies kann beispielsweise zum Erstellen oder zum Aktualisieren von einem Umfeldmodell dienen.

Die Figur 5 zeigt ein schematisches Ablaufdiagramm zum Veranschaulichen des Verfahrens 6 gemäß einer weiteren Ausführungsform mit einem im Rahmen einer Sensordatenfusion 22 auf eine Datenbank 20 zugreifenden Objektfilter 18. Es ist insbesondere eine Fusions-Architektur gezeigt, in welcher der Objektfilter 18 auf der Ebene der Sensordatenfusion auf eine Datenbank 20 zugreift, um basierend auf Sensordaten 13 von einer Vielzahl an Sensoren 2, 4 eine Erkennung von Oberflächeneigenschaften durchzuführen. Hierbei wird die Information über die Oberflächeneigenschaft beispielsweise aus einer Karte 20 gelesen.

## Patentansprüche

1. Verfahren (6) zur Auswertung von Sensordaten (13), wobei Sensordaten (13) durch Abtasten einer Umgebung durch mindestens einen Sensor (2, 4) ermittelt werden, basierend auf den Sensordaten (13) eine Objektdetektion (14) zum Ermitteln von Objekten (8, 10, 12, 12a) aus den Sensordaten (13) und eine Objektfilterung (18) durchgeführt werden, wobei von dem mindestens einen Objekt (8, 10, 12, 12a) bekannten Oberflächeneigenschaften anhand eines Zugriffs auf eine Datenbank (20) ermittelt werden, **dadurch gekennzeichnet, dass** die Datenbank (20) als eine Karte mit hinterlegten Oberflächeneigenschaften ausgestaltet ist, wobei basierend auf den ermittelten Objekteigenschaften von mindestens einem Objekt (8, 10, 12, 12a) mindestens ein Geisterobjekt (12a) aus der Menge erkannter Objekte entfernt oder die Position des Geisterobjekts zu einem tatsächlich vorhandenen Objekt korrigiert wird.

2. Verfahren nach Anspruch 1, wobei die Oberflächeneigenschaften von mindestens einem erkannten Objekt (8, 10, 12, 12a) im Rahmen einer Sensordatenfusion (22) durch eine Objektfilterung (18) basierend auf einem Zugriff auf eine Datenbank (20) ermittelt oder bereits erkannte Oberflächeneigenschaften von mindestens einem erkannten Objekt (8, 10, 12, 12a) im Rahmen einer Sensordatenfusion (22) durch eine Objektfilterung (18) verwendet werden.

3. Steuergerät (5) zum Koppeln mit mindestens einem Sensor (2, 4) und zum Auslesen von Sensordaten (13) des mindestens einen Sensors (2, 4), wobei das Steuergerät (5) dazu eingerichtet ist, alle Schritte des Verfahrens (6) gemäß einem der vorhergehenden Ansprüche auszuführen.

## Claims

1. Method (6) for evaluating sensor data (13), wherein sensor data (13) are determined by scanning an environment by means of at least one sensor (2, 4) and, based on the sensor data (13), object detection (14) for identifying objects (8, 10, 12, 12a) from the sensor data (13) and object filtering (18) are carried out, wherein surface properties known from the at least one object (8, 10, 12, 12a) are determined by accessing a database (20), **characterized in that** the database (20) is designed as a map with stored surface properties, wherein, based on the determined object properties of at least one object (8, 10, 12, 12a), at least one phantom object (12a) is removed from the set of detected objects or the position of the phantom object with respect to an object that is actually present is corrected.

2. Method according to Claim 1, wherein the surface properties of at least one detected object (8, 10, 12, 12a) are determined during sensor data fusion (22) by means of object filtering (18) based on access to a database (20), or already detected surface properties of at least one detected object (8, 10, 12, 12a) are used during sensor data fusion (22) by means of object filtering (18).

3. Control unit (5) for coupling to at least one sensor (2, 4) and for reading out sensor data (13) from the at least one sensor (2, 4), wherein the control unit (5) is configured to perform all steps of the method (6) according to one of the preceding claims.

## Revendications

1. Procédé (6) d'évaluation de données de capteurs (13), des données de capteurs (13) étant déterminées par balayage d'un environnement par au moins un capteur (2, 4), une détection d'objets (14) destinée à déterminer des objets (8, 10, 12, 12a) à partir des données de capteur (13) et un filtrage d'objet (18) étant effectués sur la base des données de capteurs (13), les propriétés de surface connues de l'au moins un objet (8, 10, 12, 12a) étant déterminées à l'aide d'un accès à une base de données (20), **caractérisé en ce que** la base de données (20) est réalisée sous la forme d'une carte avec des propriétés de surface enregistrées, au moins un objet fantôme (12a) étant supprimé de l'ensemble des objets reconnus ou la position de l'objet fantôme par rapport à un objet réellement présent étant corrigée sur la base des propriétés d'objet déterminées d'au moins un objet (8, 10, 12, 12a).

2. Procédé selon la revendication 1, les propriétés de surface d'au moins un objet (8, 10, 12, 12a) reconnu étant déterminées dans le cadre d'une fusion de données de capteurs (22) par un filtrage d'objet (18) basé sur un accès à une base de données (20), ou les propriétés de surface déjà reconnues d'au moins un objet (8, 10, 12, 12a) reconnu étant utilisées dans le cadre d'une fusion de données de capteurs (22) par un filtrage d'objet (18).

3. Contrôleur (5) destiné à être couplé à au moins un capteur (2, 4) et à lire des données de capteur (13) provenant de l'au moins un capteur (2, 4), le contrôleur (5) étant conçu pour exécuter toutes les étapes du procédé (6) selon l'une des revendications précédentes.
